# EUROPEAN PATENT SPECIFICATION

(11) **EP 1 099 073 B1**
(45) Date of publication and mention of the grant of the patent: **24.09.2003**
(21) Application number: 99936823.6
(22) Date of filing: 29.07.1999
(51) Int. Cl.: F16L 13/02, B23K 37/053

(54) **PIPE CLAMP**
ROHRSCHELLE
BRIDE POUR TUYAUX

(30) Priority: 29.07.1998 GB 9816373
(43) Date of publication of application: 16.05.2001
(73) Proprietor: Milligan, William, Glasgow G73 3JY (GB)
(72) Inventor: Milligan, William, Glasgow G73 3JY (GB)
(74) Representative: McKechnie, Neil
(86) International application number: GB9902503
(87) International publication number: WO00006935

(56) References cited:
- DE-A1- 2 448 229
- DE-A1- 2 526 946
- US-A- 4 750 662
- US-A- 5 052 608

## Description

This invention relates to a pipe clamp especially but not exclusively for use with large bore metal tubular pipework and for ensuring accurate matching of end profiles prior to welding together of pipe sections.

Tubular pipework of the type commonly used in the petrochemical industry is often formed from rolled and seam welded sheet. Sections of pipe are cut to length and used in combination with other components to form a complete installation. Typically as a result of the way in which the pipework is formed and seam welded cut sections of pipe will tend to be slightly out of round. This obviously poses problems when sections of pipework are matched up to each other and to various fittings as without remedial action it is not possible to obtain a neat high quality weld at the joint. Accordingly, some form of clamp may be used to pull the pipe into shape before welding.

The most commonly used pipe clamp in the petro-chemical industry is the chain type clamp. Such a clamp can be used on various pipe sizes to reshape oval and out of round sections before welding. In this way it is possible to ensure that the sections to be welded are a close fit which allows a neat and effective weld to be produced.

However such clamps are expensive and have a number of disadvantages and limitations. They are often cumbersome to use in confined areas especially on larger bore pipework as the chain construction makes the clamps very heavy.

German Patent Application Number DE 2448229 discloses one such clamp for the holding of pipe sections in coaxial alignment. This arrangement comprises a band positioned around, and separated from, a pipe section. The band is secured to the pipe section by a plurality of centring bolts, which can be adjusted to correct irregularities in the pipe section.

However, each centring bolt in the clamp of DE 2448229 must be individually adjusted, making the clamp inconvenient and time-consuming to fit. In addition, there are difficulties in balancing the force applied by each bolt, and over-tightening of any bolts may result in creating additional irregularities in the pipe section. Further, the clamp is heavier and more bulky than a pipe clamp need necessarily be.

It is an object of the present invention to provide a pipe clamp that overcomes these disadvantages of the prior art clamp.

According to a first aspect of the invention there is provided a pipe clamp according to claim 1.

According to a second aspect of the invention there is provided a method of matching the end profiles of a pair of tubular members prior to the welding together thereof according to claim 6.

Embodiments of the present invention will now be described by way of example with reference to the accompanying drawings in which:

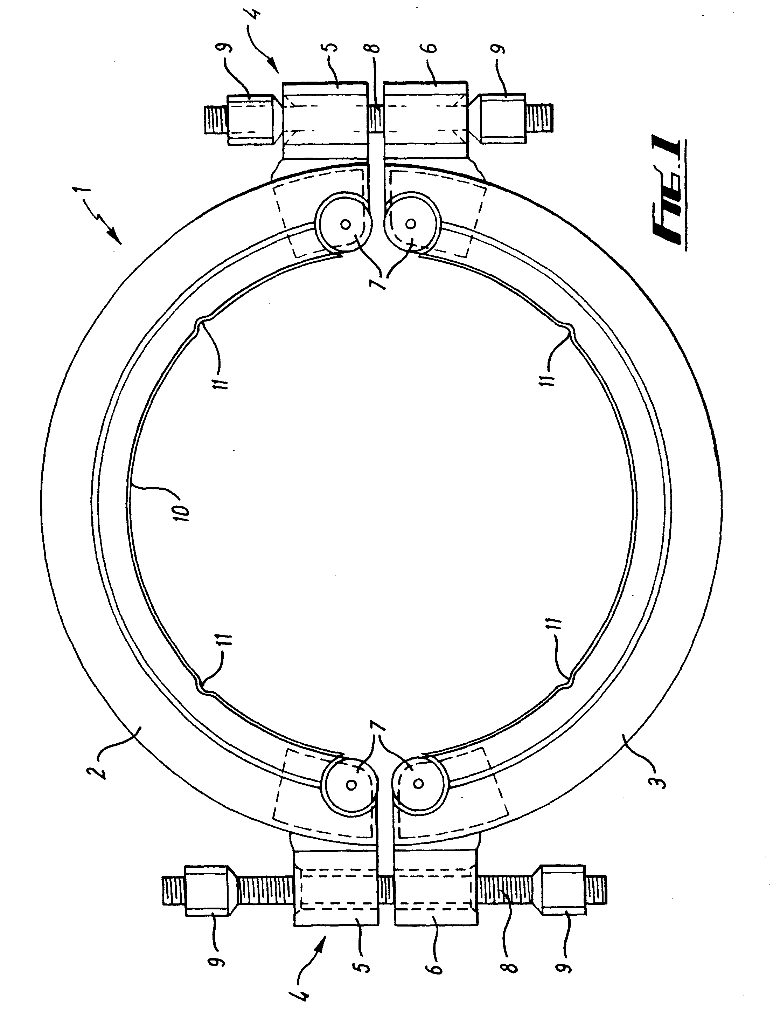

Fig. 1 is an end view of a pipe clamp in accordance with the present invention;

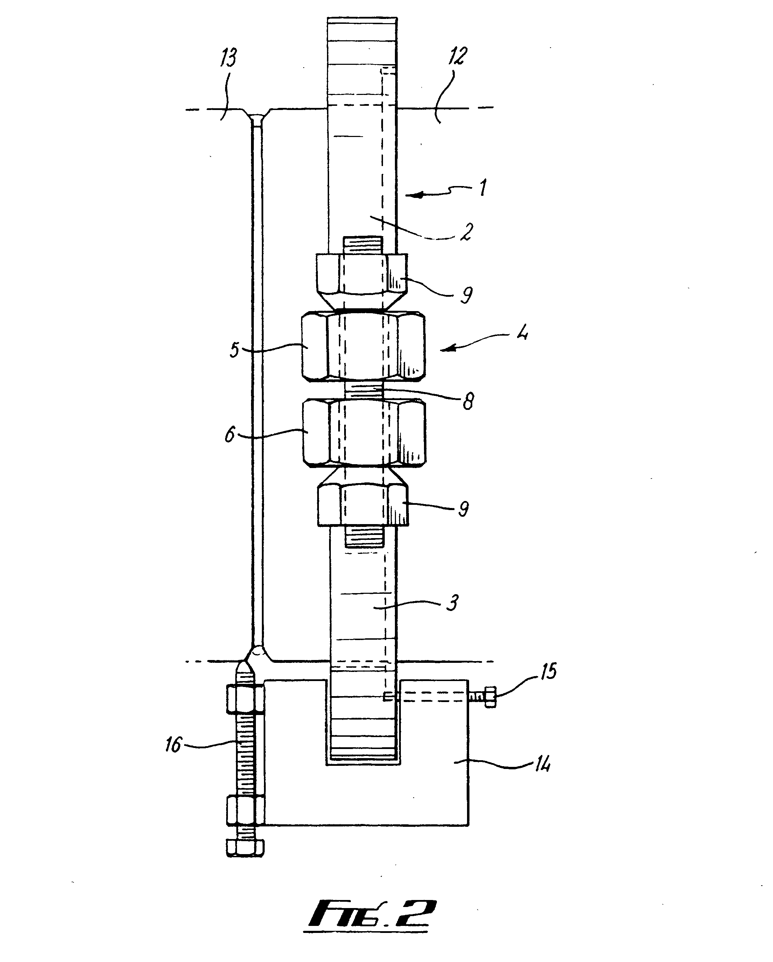

Fig 2 is a side view of the pipe clamp of Fig 1 in position on a pair of matched pipe sections; and

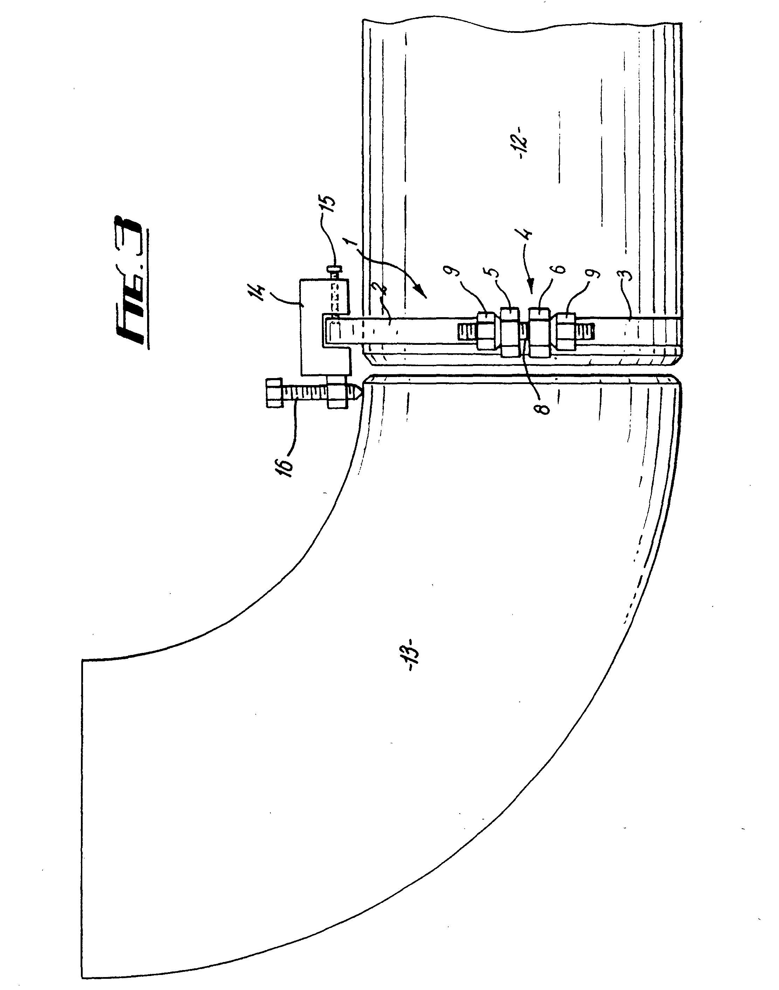

Fig 3 is an alternative side view of the pipe clamp of Fig 1 in position on two adjacent pipe sections.

Referring to the drawings a pipe clamp in accordance with the present invention is shown generally at 1. The clamp comprises a pair of generally semi-circular sections, 2 and 3 which are attached one to another by a pair of fittings shown generally at 4. Each fitting 4 comprises a first section 5 and a second section 6 each mounted on a respective clamp section 2, 3 via a stainless steel roller 7. A threaded tensioning rod 8 provided with adjustment nuts 9 is fitted to each fitting 4. The inner surface 10 of the clamp sections 2, 3 each have indentations 11, which allow the clamp to fit over any weld seams, which may stand proud of the surface of a pipe section.

In use, the pipe clamp 1 is fitted around the end of a first section of pipe 12. The nuts 9 on the rods 8 are tightened so that the fittings 4 pull the clamp sections 2 and 3 together tightly against the pipe 12. Once fully tightened the clamp 1 pulls the end of the pipe 12 into the correct round profile. The stainless steel rollers 7 reduce friction in the fittings 4 which ensures that the nuts 9 can be easily tightened either with hand spanners or air tools.

Once the parent pipe 12 has been correctly shaped a secondary pipe 13 to be joined to it is put in position adjacent to the parent pipe 12. Secondary clamps 14 are mounted on the main clamp 1 using fixings 15 and are provided with jacking bolts 16. By adjusting the jacking bolts 16 the secondary pipe 13 is also brought into a round profile. The two, now matching, pipe sections are then tack welded together after which the jacking bolts are removed with the main clamp 1 remaining in position until both a rootweld and secondpass weld of the complete joint are completed. This prevents pipe distortion during the welding process, which eliminates the need to repair welds or indeed the need to cut out and redo welds because of mismatched joins.

The clamp can easily be produced in sizes to match the commonly used pipe dimensions. The simple construction and compact dimensions allow for easy handling and use in awkward and tight positions.

The grade of material used in construction of the clamp is such as to make it useable on and compatible with a range of different material pipe sections. The clamp is particularly suitable for use on exotic materials such as cunifer, stainless steel, duplex and super duplex but is also suitable for use on standard materials such as carbon steel. When used on certain materials there is a need to prevent contamination. This can be easily achieved by using heat resistant duct tape between the clamp and the pipe. Duct tape is cheap and easily replaced so is ideal for this task.

Modifications and improvements may be made without departing from the scope of the invention herein intended.

## Claims

1. A pipe clamp comprising:
- a first clamp member (1) arranged for fitment around a first tubular member;
- means (4, 5, 6, 8, 9) for tightening the first clamp member around said tubular member;
- a second clamp member (14) mounted directly on the first clamp member, said second clamp member having means (16) for engaging a second tubular member, thereby allowing to bring the end profile of said second tubular member into alignment with the end profile of the first tubular member;
**characterised in that** the first clamp member (1) comprises a pair of part circular sections (2, 3) releasably connected to one another, said part circular sections (2, 3) defining an inner surface profile of the first clamp member (1) corresponding to the desired profile of the first tubular member, and in use, at least part of the inner surface of the first clamp member is pulled tightly against the first tubular member to cause the end profile of the first tubular member to correspond to the profile of the first clamp member.

2. A pipe clamp as claimed in Claim 1, wherein the means (4, 5, 6, 8, 9) for releasably connecting the pair of part circular sections one to another comprises threaded adjustment means (8, 9).

3. A pipe clamp as claimed in any one of the preceding Claims, wherein said second clamp member (14) is movable around the circumference of the first clamp member (1).

4. A pipe clamp as claimed in Claim 3 wherein a plurality of individually movable second clamp members (14) are provided.

5. A pipe clamp as claimed in any one of the preceding Claims wherein the or each second clamp member (14) has a threaded adjuster (16) for engaging and applying profile correction to the second tubular member.

6. A method of matching the end profiles of a pair of tubular members prior to the welding together thereof, comprising the steps of:
- arranging a first clamp member (1) around a first tubular member, the first clamp member (1) comprising a pair of part circular sections (2, 3) releasably connected to one another, said part circular sections defining an inner surface profile corresponding to the desired profile of the first tubular member;
- tightening the clamp around said first tubular member such that at least part of the inner surface of the first clamp member (1) is pulled tightly against the first tubular member, to cause the end profile of the first tubular member to correspond to the profile of the first clamp member;
- engaging a second clamp member (14) mounted on the first clamp member (1) with a second tubular member, thereby bringing the end profile of said tubular member into alignment with the end profile of the first tubular member.

## Patentansprüche

1. Rohrschelle, umfassend:
- ein erstes Schellenelement (1), das zum Anbringen um ein erstes röhrenförmiges Elemente angeordnet ist,
- Mittel (4, 5, 6, 8, 9) zum Festspannen des ersten Schellenelements um das genannte röhrenförmige Element,
- ein zweites Schellenelement (14), das direkt auf dem ersten Schellenelement montiert ist, wobei das genannte zweite Schellenelement ein Mittel (16) zum Angreifen eines zweiten röhrenförmigen Elements hat, wodurch das Endprofil des genannten zweiten röhrenförmigen Elements mit dem Endprofil des ersten röhrenförmigen Elements in fluchtende Anordnung gebracht werden kann,
**dadurch gekennzeichnet, dass** das erste Schellenelement (1) ein Paar teilkreisförmiger Abschnitte (2, 3) umfasst, die lösbar miteinander verbunden sind, wobei die genannten teilkreisförmigen Abschnitte (2, 3) ein Innenflächenprofil des ersten Schellenelements (1) entsprechend dem gewünschten Profil des ersten röhrenförmigen Elements definieren und im Gebrauch wenigstens Teil der Innenfläche des ersten Schellenelements eng an das erste röhrenförmige Element angezogen wird, um zu bewirken, dass das Endprofil des ersten röhrenförmigen Elements dem Profil des ersten Schellenelements entspricht.

2. Rohrschelle nach Anspruch 1, bei der die Mittel (4, 5, 6, 8, 9) zum lösbaren Verbinden des Paares von Teilkreisabschnitten miteinander mit Gewinde versehene Einstellmittel (8, 9) aufweisen.

3. Rohrschelle nach einem der vorhergehenden Ansprüche, bei der das genannte zweite Schellenelement (14) um den Umfang des ersten Schellenelements (1) bewegbar ist.

4. Rohrschelle nach Anspruch 3, bei der eine Mehrzahl von einzeln bewegbaren zweiten Schellenelementen (14) bereitgestellt ist.

5. Rohrschelle nach einem der vorhergehenden Ansprüche, bei der das oder jedes zweite Schellenelement (14) eine mit Gewinde versehene Einstellvorrichtung (16) zum Ineingriffnehmen des zweiten röhrenförmigen Elements und zum Anwenden von Profilkorrektur auf es hat.

6. Verfahren zum Abstimmen der Endprofile eines Paares von röhrenförmigen Elementen aufeinander vor dem Zusammenschweißen dieser, das die folgenden Schritte umfasst:
- Anordnen eines ersten Schellenelements (1) um ein erstes röhrenförmiges Element, wobei das erste Schellenelement (1) ein Paar teilkreisförmiger Abschnitte (2, 3) umfasst, die lösbar miteinander verbunden sind, wobei die genannten teilkreisförmigen Abschnitte ein Innenflächenprofil des ersten Schellenelements definieren;
- Festziehen der Schelle um das genannte erste röhrenförmige Element, sodass wenigstens Teil der Innenfläche des ersten Schellenelements (1) eng an das erste röhrenförmige Element angezogen wird, um zu bewirken, dass das Endprofil des ersten röhrenförmigen Elements dem Profil des ersten Schellenelements entspricht;
- Ineingriffbringen eines an dem ersten Schellenelement (1) montierten zweiten Schellenelements (14) mit einem zweiten röhrenförmigen Element, wodurch das Endprofil des genannten röhrenförmigen Elements mit dem Endprofil des ersten röhrenförmigen Elements in fluchtende Anordnung gebracht wird.

## Revendications

1. Collier de serrage comprenant :
- un premier organe de serrage (1) propre à être fixé autour d'un premier organe tubulaire ;
- un moyen (4,5,6,8,9) pour serrer le premier organe de serrage autour dudit organe tubulaire ;
- un deuxième organe de serrage (14) monté directement sur le premier organe de serrage, ledit deuxième organe de serrage comprenant un moyen (16) pour engager un deuxième organe tubulaire, permettant de ce fait d'amener le profil d'extrémité dudit deuxième organe tubulaire dans l'alignement du profil d'extrémité du premier organe tubulaire ;
**caractérisé en ce que** le premier organe de serrage (1) comprend deux sections partiellement circulaires (2,3) raccordées de manière libérable l'une à l'autre, lesdites sections partiellement circulaires (2,3) définissant un profil de surface interne du premier organe de serrage (1) correspondant au profil souhaité du premier organe tubulaire et, en fonctionnement, au moins une partie de la surface interne du premier organe de serrage est tirée fermement contre le premier organe tubulaire pour amener le profil d'extrémité du premier organe tubulaire à correspondre au profil du premier organe de serrage.

2. Collier de serrage suivant la revendication 1, dans lequel le moyen (4,5,6,8,9) pour raccorder de manière détachable les deux sections partiellement circulaires l'une à l'autre comprend un moyen de réglage fileté (8,9).

3. Collier de serrage suivant l'une quelconque des revendications précédentes, dans lequel ledit deuxième organe de serrage (14) est mobile autour de la circonférence du premier organe de serrage (1).

4. Collier de serrage suivant la revendication 3, dans lequel une pluralité de deuxièmes organes de serrage (14) mobiles individuellement sont prévus.

5. Collier de serrage suivant l'une quelconque des revendications précédentes, dans lequel le ou chaque deuxième organe de serrage (14) comprend un dispositif de réglage fileté (16) pour engager le deuxième organe tubulaire et appliquer une correction de profil à celui-ci.

6. Procédé permettant de faire correspondre les profils d'extrémité de deux organes tubulaires avant de les souder l'un à l'autre, comprenant les étapes suivantes :
- fixation d'un premier organe de serrage (1) autour d'un premier organe tubulaire, le premier organe de serrage (1) comprenant deux sections partiellement circulaires (2,3) raccordées de manière libérable l'une à l'autre, lesdites sections partiellement circulaires définissant un profil de surface interne correspondant au profil souhaité du premier organe tubulaire ;
- serrage de l'organe de serrage autour dudit premier organe tubulaire de telle sorte qu'au moins une partie de la surface interne du premier organe de serrage (1) est tirée fermement contre le premier organe tubulaire, pour amener le profil d'extrémité du premier organe tubulaire à correspondre au profil du premier organe de serrage ;
- engagement dans un deuxième organe de serrage (14) monté sur le premier organe de serrage (1) d'un deuxième organe tubulaire, amenant de ce fait le profil d'extrémité dudit organe tubulaire dans l'alignement du profil d'extrémité du premier organe tubulaire.
